# EUROPEAN PATENT APPLICATION

(11) **EP 2 282 254 A1**
(43) Date of publication of application: **09.02.2011**
(21) Application number: 09746421.8
(22) Date of filing: 06.03.2009
(51) Int. Cl.: G06F 3/041, G02F 1/13357, G06F 3/042, G09F 9/00, G09G 3/20, G09G 5/00, G02F 1/1333, G09G 3/36

(54) **DISPLAY DEVICE AND CONTROL METHOD**

(30) Priority: 12.05.2008 JP 2008124654
(71) Applicant: Sharp Kabushiki Kaisha, Osaka-shi, Osaka 545-8522 (JP)
(72) Inventor: YOSHIMOTO, Yoshiharu, Osaka 545-8522 (JP); NAKO, Kazuyuki, Osaka 545-8522 (JP)
(74) Representative: Müller - Hoffmann & Partner
(86) International application number: PCT/JP2009/054269
(87) International publication number: WO 2009/139214

(57) **Abstract**

A display device is provided which is capable of specifying a touch operation direction when a touch operation is detected. A display device (1) includes a photosensor built-in LCD (10) for capturing, in an image, a touch operation performed onto a display screen, from inside a display unit; and a touch operation direction determining unit (15) for determining a direction of the touch operation performed onto the touch location, based on the captured image.

## Description

### TECHNICAL FIELD

The present invention relates to a display device including a display unit such as a touch panel.

### BACKGROUND ART

A display device allowing for touch input can be typically implemented by providing a resistive film sheet, a capacitive sheet, or the like on an LCD (Liquid Crystal Display). Display devices of this type are utilized as interfaces allowing for intuitive operations in various applications such as ATMs installed in banks or the like, ticket-vending machines from which tickets or the like are purchased, car navigation systems, mobile devices, and gaming machines.

Basically, to provide an input or inputs to each of these display devices allowing for touch input, a user touches one point or a plurality of points thereon. The display device is capable of only determining whether or not the user has touched and where in the display screen the user has touched.

Known techniques for implementing touch input are a resistive-film method, a capacitive method, an infrared method, an electromagnetic induction method, and an ultrasonic method, as well as a method of implementing touch input by analyzing an image captured by a photosensor built-in LCD so as to detect a touch location. For example, Japanese Patent Laying-Open No. 2006-244446 (Patent Document 1) describes such a photosensor built-in LCD.

As such, there are various known techniques for detecting a touch location. However, a direction of a touch operation to a touch location cannot be determined only by detecting a touch location.

In view of this, Japanese Patent Laying-Open No. 2006-47534 (Patent Document 2) proposes to perform display control in accordance with a result of determining from which one of a driver's seat and a passenger's seat a touch operation has been performed onto a display screen of a dual-view LCD type car navigation system that is installed in a vehicle and presents different images to a person on the left side and a person on the right side respectively. This system determines which one of the persons on the left and right seats has performed the touch operation, by respectively transmitting different signals from the driver's seat and the passenger's seat via human bodies that are in contact with the vehicular seats or a steering wheel.
Patent Document 1: Japanese Patent Laying-Open No. 2006-244446
Patent Document 2: Japanese Patent Laying-Open No. 2006-47534

### DISCLOSURE OF THE INVENTION

### PROBLEMS TO BE SOLVED BY THE INVENTION

In the system proposed in Patent Document 2, the persons always need to be in touch with the signal transmitting devices provided in addition to the display device, i.e., always need to sit on the seats or touch the steering wheel. Hence, the system is only capable of determining a touch operation direction under such a limited circumstance. Further, in the system, a relatively large-scale device needs to be provided outside the display device so as to transmit the signals. Hence, it is unrealistic to apply the system to mobile devices, which are carried by users when they go out.

Apart from the system for transmitting the determination signals via human bodies, Patent Document 2 also proposes a system for determining a touch operation direction by analyzing the display device's display screen image captured from behind the passenger's seat and the driver's seat by a camera installed at a rear portion of the ceiling in the vehicular compartment.

However, this system hardly detects with precision in what direction it is touched, when a touched portion cannot be viewed by obstacles such as the persons' heads or backs or when the one person's hand crosses the other person's hand. As with the system in which the signal transmitting device is provided outside the display device, this method cannot be also applied to mobile devices, which are carried by users when they go out.

The present invention is made to solve the foregoing problems, and its object is to provide a display device capable of specifying a touch operation direction when a touch operation is performed (direction of touch onto a display screen in the touch operation), as well as a control method in such a display device.

### MEANS FOR SOLVING THE PROBLEMS

A display device according to the present invention includes: a display unit having a display screen; an image capturing unit for capturing, in an image, a touch operation performed onto the display screen, from inside the display unit; a touch location detecting unit for detecting a touch location of the touch operation performed onto the display screen; and a direction determining unit for determining a touch direction of the touch operation performed onto the display screen, based on the image captured by the image capturing unit.

Preferably, the direction determining unit determines the touch direction based on an image of a predetermined area from the touch location in the image captured by the image capturing unit.

Preferably, the direction determining unit determines the touch direction based on a change in density in an image of the touch location and a periphery thereof, when a finger or a touch member touches the display screen for the touch operation and is captured in the image by the image capturing unit.

Preferably, the image capturing unit is a photosensor or a temperature sensor.

Preferably, the touch location detecting unit detects the touch location based on the image captured by the image capturing unit.

### EFFECTS OF THE INVENTION

According to the present invention, a touch operation onto a display screen is captured in an image from inside the display unit. Based on the image thus captured, a touch operation direction for the touch location is determined. Accordingly, the display device itself is capable of specifying the touch operation direction when the touch operation is detected.

### BRIEF DESCRIPTION OF THE DRAWINGS

Fig. 1 is a block diagram showing a schematic configuration of a display device 1 according to a first embodiment.
Fig. 2 illustrates a function of a photosensor built-in LCD.
Fig. 3 shows an exemplary captured image.
Fig. 4 illustrates a principle of a method of determining a touch operation direction by specifying a direction of density gradient.
Fig. 5 is a flowchart illustrating a touch operation direction determining process P1.
Fig. 6 is a schematic diagram illustrating touch operation direction determining process P1.
Fig. 7 is a flowchart showing a procedure of processing for determining a criterion for the touch operation direction.
Fig. 8 illustrates a principle of a method of determining a touch operation direction from edge feature distribution.
Fig. 9 is a flowchart illustrating a touch operation direction determining process P2.
Fig. 10 illustrates a feature of a fingerprint.
Fig. 11 is a diagram of a screen when the display device is applied to a gaming machine.
Fig. 12 is a schematic diagram of operation right data.
Fig. 13 is a flowchart showing a procedure of processing in which the display device determines whether an operation on a piece is valid or invalid.
Fig. 14 is a block diagram showing a schematic configuration of a display device provided with a capacitive type touch panel.
Fig. 15 is a block diagram showing a schematic configuration of a display device according to a second embodiment of the present invention.
Fig. 16 shows an exemplary display screen of an LCD.
Fig. 17 illustrates a principle of a method of "determination from an ellipse longitudinal direction".
Fig. 18 is a flowchart showing a procedure of processing for the method of "determination from an ellipse longitudinal direction".

### DESCRIPTION OF THE REFERENCE SIGNS

1, 2, 11: display device; 10, 18: photosensor built-in LCD; 14: touch location detecting unit; 15: touch operation direction determining unit; 17: capacitive type touch panel; 20: photosensor built-in dual-view LCD.

### BEST MODES FOR CARRYING OUT THE INVENTION

The following describes embodiments of the present invention with reference to figures. In the description below, the same parts and components are given the same reference characters. Their names and functions are the same.

### First Embodiment

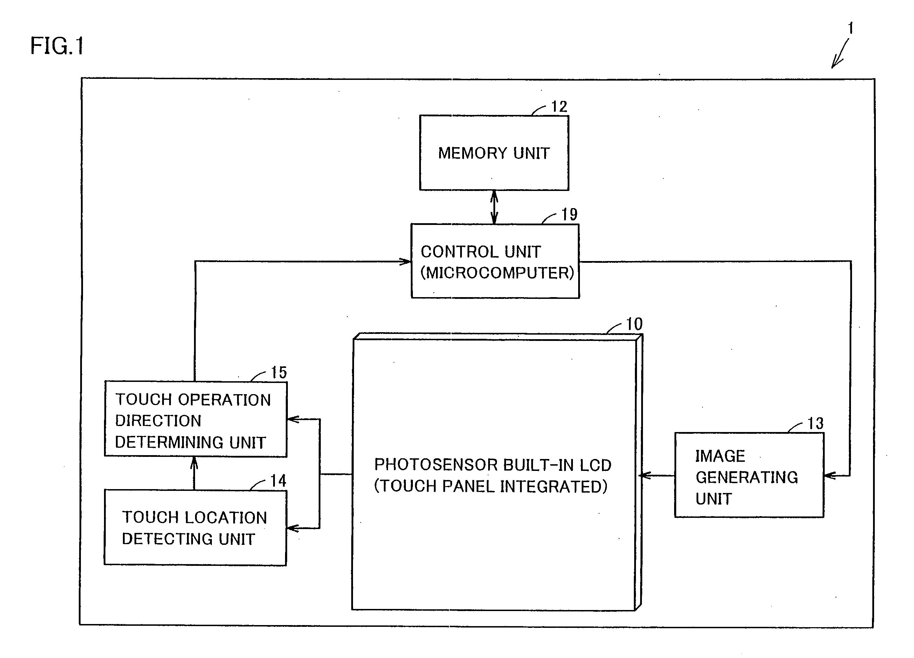

Fig. 1 is a block diagram showing a schematic configuration of a display device 1 according to a first embodiment of the present invention. Display device 1 is applicable for example to a gaming machine.

Display device 1 includes a photosensor built-in LCD (liquid crystal panel/display) 10 that has pixels in each of which a photosensor is built and that is capable of not only displaying but also capturing an image. Display device 1 further includes a touch location detecting unit 14 for detecting a touch location by analyzing the image captured by photosensor built-in LCD 10. Display device 1 further includes a touch operation direction determining unit 15 for determining in what direction it is touched, by analyzing the image captured by photosensor built-in LCD 10. Display device 1 further includes a control unit 19, which receives data indicating a touch location and a touch operation direction, for performing general control over display device 1. Display device 1 further includes a memory unit 12 for storing data and instructions therein. Display device 1 further includes an image generating unit 13 for generating an image to be displayed on a screen.

When a touch operation onto the display screen is detected, photosensor built-in LCD 10 captures from its inside an image of the display screen thus touched and operated Photosensor built-in LCD 10 provides the captured image to touch location detecting unit 14. Touch location detecting unit 14 analyzes the image to detect the touch location.

Exemplary methods usable for detecting a touch location are techniques such as edge feature extraction and pattern matching. A touch location is detected by the image processing as such, so touch location detecting unit 14 can detect a plurality of touch locations when a plurality of locations on the screen are touched simultaneously. This allows an operator to simultaneously operate a plurality of operation targets displayed on the screen. This also permits a plurality of operators to simultaneously operate them.

Touch operation direction determining unit 15 analyzes the image obtained by photosensor built-in LCD 10, with reference to the touch location detected by touch location detecting unit 14. Through the analysis, touch operation direction determining unit 15 determines a touch operation direction.

Control unit 19 uses the touch location detected by touch location detecting unit 14 and the touch operation direction determined by touch operation direction determining unit 15, so as to control display device 1, which serves as for example a gaming machine.

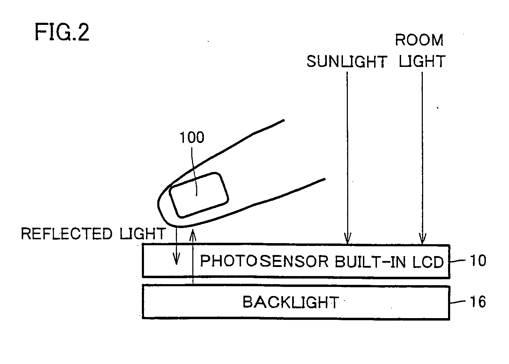

Photosensor built-in LCD 10 includes the photosensors (not shown) respectively corresponding to the pixels. The photo sensors mainly respond to a frequency of a visible light region. As illustrated in Fig. 2, each of the photosensors in photosensor built-in LCD 10 is designed to receive external light such as room light or sunlight, and light emitted from backlight 16 and reflected by finger 100 placed on the display screen. In photosensor built-in LCD 10, the light received by the photosensors is converted by an AD converter into a digital value, which is then output as a grayscale image.

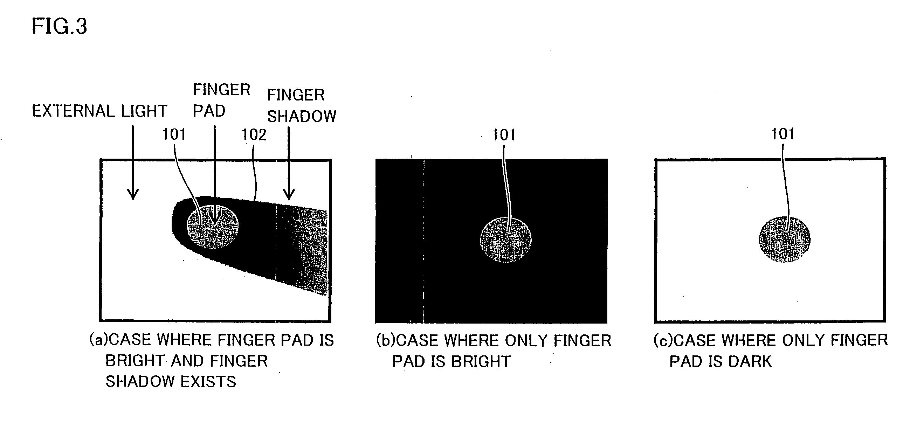

Images captured by the photosensors upon touch operations differ depending on the intensities of the external light and the backlight as well as a manner of placing a finger thereon. Fig. 3 illustrates three typical examples thereof.

Even when the intensity of the external light is changed, the brightness of a portion corresponding to the finger pad placed in contact with or adjacent to the display screen is not changed much. In contrast, the brightness in a portion not shaded by the finger and thus receiving the external light is directly affected by the change in brightness of the external light. Hence, the portion not shaded by the finger and receiving the external light gets darker or brighter than the portion corresponding to the finger pad, whereby contrast changes therebetween.

Fig. 3(a) shows an exemplary image captured when the display screen of display device 1 is irradiated with relatively bright external light. As shown in Fig. 3 (a), a portion external to the finger blocking the light is in white. A finger pad image 101, which is an image of the finger pad partially in contact with the screen, slightly gets brighter due to the reflected light of backlight 16 than a finger shadow image 102, which is darker due to the blockage of the light.

Fig. 3(b) shows an exemplary image captured when the external light is relatively dark. As shown in Fig. 3(b), finger pad image 101, the image of the finger pad partially in contact with the screen, receives the reflected light of backlight 16 and is therefore brighter than the other portion that is in black.

Fig. 3(c) shows an exemplary image captured when the external light is parallel light such as sunlight and is very bright. Finger pad image 101, the image of the finger pad partially in contact with the screen and receiving the reflected light of backlight 16, is darker because portions around finger pad image 101 is exposed to the external light more intense than the reflected light.

The following fully describes methods by which touch operation direction determining unit 15 determines a touch operation direction. Touch operation direction determining unit 15 determines the touch operation direction based on an image of a predetermined area from the touch location in the image captured by photosensor built-in LCD 10. As the methods by which touch operation direction determining unit 15 determines the touch operation direction, the following three methods will be described below sequentially: "determination from a direction of density gradient", "determination from edge feature distribution", and "determination from a fingerprint shape".

### Determination from Direction of Density Gradient

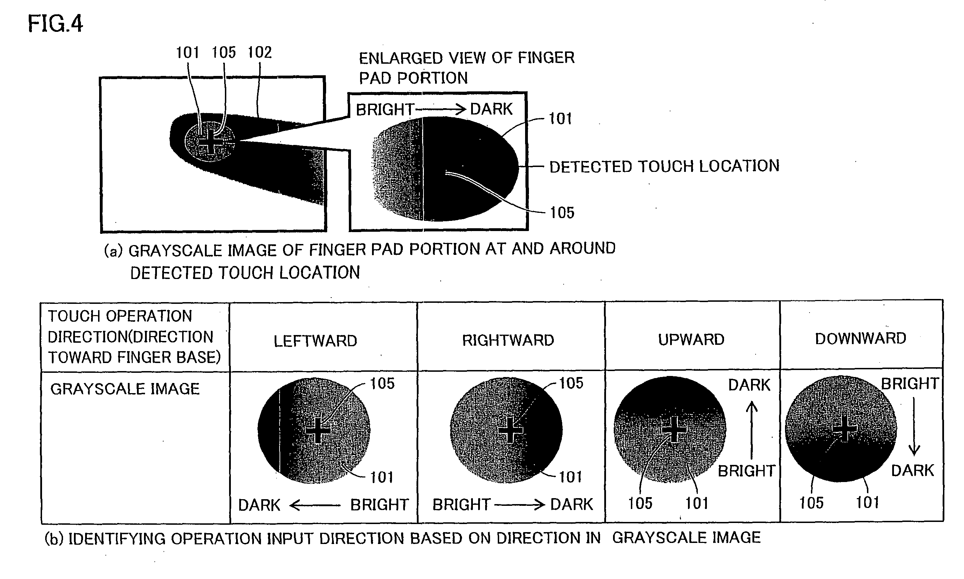

Fig. 4 illustrates a principle of the method for determining the touch operation direction by specifying the direction of density gradient.

This method of determination is to determine the touch operation direction by examining a direction of density gradient in a grayscale image of a portion at and around the detected touch location with respect to the density in the touch location, in the image of the entire display screen captured by the photosensor built-in LCD 10.

Fig. 4(a) shows the image of the portion at and around the touch location in the image captured by photosensor built-in LCD 10. In this image, as with Fig. 3(a), finger pad image 101, which is the image of the finger pad partially in contact with the screen, and finger shadow image 102 are displayed. It should be noted that each cross mark 105 in the figure is a mark for illustration of the touch location detected by touch location detecting unit 14. The central portion of the cross represents the touch location. Cross mark 105 is not presented in the actual image.

Observing finger pad image 101 of Fig. 4(a) in detail, the following feature is found as shown in an enlarged view of the finger pad: the finger pad image gets brighter in a direction from the touch location toward the finger tip due to the reflected light because the finger is close to the screen, whereas the finger pad image gets darker in a direction toward the finger base because the intensity of the reflected light is weaker and the density in the image is accordingly higher. This is because one touches the screen with a finger obliquely downward relative to the arm. It should be noted that the same feature is found when a touch operation is done with a touch pen instead of a finger.

Hence, in finger pad image 101 of the example of Fig. 4(a), it can be said that the direction in which the image density is getting higher corresponds to a direction toward the finger base, i.e., toward the arm, or a direction toward the operator. In view of this, in the example of Fig. 4(a), the direction of density gradient in which the image density is getting higher is specified and is determined as the touch operation direction.

Fig. 4(b) shows a criterion for determining, based on the above-described principle, which one of the four directions, i.e., the upward, downward, leftward, and right ward directions, the touch operation direction corresponds to. As shown in Fig. 4(b), based on the direction of density gradient in finger pad image 101 ("bright → dark" in the figure), it can be determined which one of the four leftward, rightward, upward, and downward directions the touch operation direction corresponds to.

It should be noted that only the four directions are illustrated for the touch operation direction for simplicity in Fig. 4(b) but eight or sixteen directions including oblique directions may be employed by calculating the direction of density gradient more strictly so as to determine the touch operation direction more exactly.

It should be also noted that in the description herein, the direction in which the grayscale image is getting darker (direction toward the finger base) is determined as the touch operation direction, but the direction in which the grayscale image is getting brighter (direction toward the fingertip) may be determined as the touch operation direction.

Generally, in the vicinity of the touch location, densities differ in the grayscale image among, for example, a portion in which the finger is strongly pressed against the display screen, a portion in which the finger is lightly pressed thereagainst, a portion in which the finger is slightly spaced therefrom, and the like. Thus, display device 1 determines the touch operation direction from the direction of density gradient in the grayscale image, thereby accurately determining the touch operation direction.

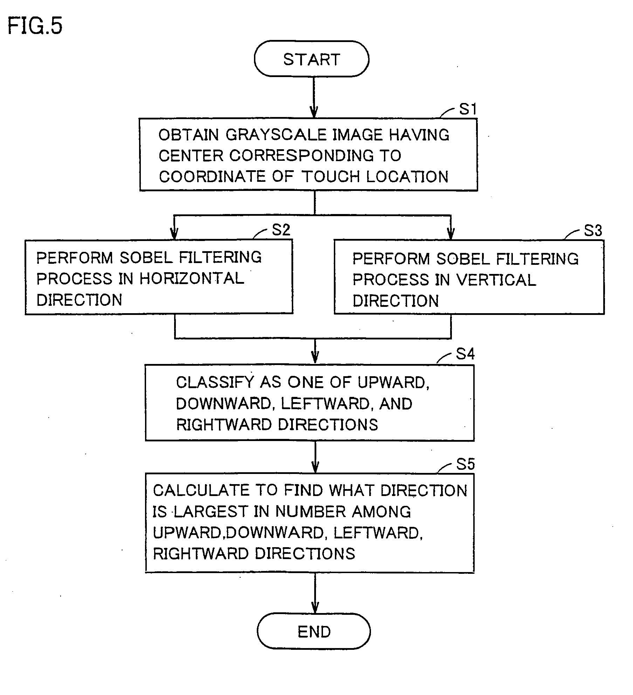

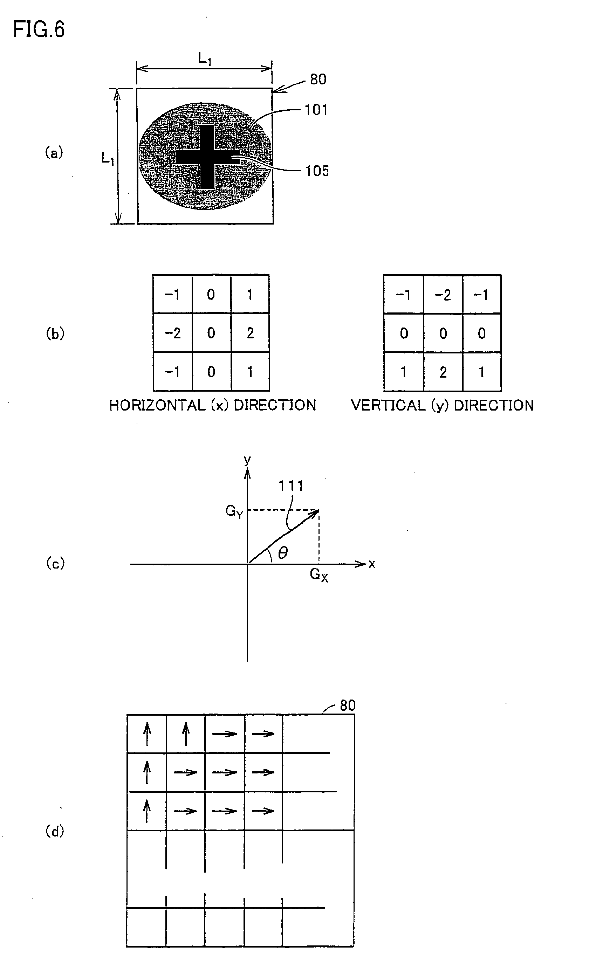

Next, referring to Fig. 5 and Fig. 6, the following describes a specific procedure in which display device 1 determines the touch operation direction based on the determination principle shown in Fig. 4. Fig. 5 is a flowchart illustrating a touch operation direction determining process P1 performed by display device 1. Further, Fig. 6 is a schematic diagram illustrating touch operation direction determining process P1.

In touch operation direction determining process P1, display device 1 first obtains a grayscale image having a center corresponding to the coordinate of a touch location (S1). The grayscale image thus obtained is, for example, an image of a portion within an analysis area 80 in the image captured by photosensor built-in LCD 10. Analysis area 80 is an area of a square having vertical and horizontal lengths of L1 × L1, and has its center corresponding to the coordinate of the touch location represented by the central portion of cross mark 105 as shown in Fig. 6(a). The lengths, L1, are set in advance to encompass a finger pad image 101 of a standard-sized finger.

It should be noted that display device 1 may be provided with a function of registering the size of a user's finger and may set the size of analysis area 80 based on the size thus registered. Further, the shape of analysis area 80 is not limited to the square but it may be rectangular, circular, or elliptic.

Next, in order to calculate to find the direction of density gradient, display device 1 performs a Sobel filtering process onto the obtained grayscale image in the horizontal direction (x direction) and the vertical direction (y direction) (S2, S3). Fig. 6(b) shows exemplary Sobel filtering in the horizontal direction (x direction) and exemplary Sobel filtering in the vertical direction (y direction). In the example illustrated herein, the Sobel filtering is employed but any filtering may employed as long as it is filtering for edge extraction.

Display device 1 applies the Sobel filtering to the grayscale image of the portion within analysis area 80 so as to calculate Sobel values in the horizontal direction (x direction) and the vertical direction (y direction) for each pixel constituting the grayscale image. Fig. 6(b) shows a density gradient vector 111 obtained from a Sobel value Gx in the horizontal direction (x direction) and a Sobel value Gy in the vertical direction (y direction) for a specific pixel. Density gradient vector 111 has a density gradient angle θ.

Then, in S2 and S3, based on the Sobel values calculated for each pixel in the horizontal direction and the vertical direction, display device 1 classifies the direction of density gradient in each pixel as one of the four directions, i.e., upward, downward, leftward, and rightward directions (S4). As shown in Fig. 6(b), for each pixel, Sobel value Gx in the horizontal direction (x direction) and Sobel value Gy in the vertical direction (y direction) are calculated. A direction based on a larger one of absolute values of Gx and Gy is determined as the direction of density gradient for the pixel because display device 1 classifies a direction of density gradient as one of the four upward, downward, leftward, and rightward directions. When the Sobel value in the horizontal direction is a positive value, the direction of density gradient is the leftward direction, and when it is a negative value, the direction of density gradient is the rightward direction. When the Sobel value in the vertical direction is a positive value, the direction of density gradient is the upward direction, and when it is a negative value, the direction of density gradient is the downward direction.

For example, when (Gx, Gy) = (-10, +15), display device 1 determines the direction of Gy, i.e., the upward direction corresponding to the positive direction in the vertical direction, as the direction of density gradient for the pixel. In consideration of influences of noise and the like, display device 1 does not determine the direction of density gradient for the pixel when each of the absolute values thereof is equal to or smaller than a predetermined threshold.

In this way, for each pixel, display device 1 classifies the direction of density gradient as one of the four upward, downward, leftward, and rightward directions, thus determining the direction of density gradient for each pixel in the image of the portion within analysis area 80 as shown in the schematic diagram of Fig. 6(c).

Next, display device 1 calculates to find what direction is largest in number among the directions of density gradient, i.e., the upward, downward, leftward, rightward directions, determines the direction largest in number as the touch operation direction (S5), and terminates the process.

In the case where display device 1 determines it among more than the four directions, oblique directions are also defined in accordance with the Sobel values calculated for each pixel in the horizontal direction and the vertical direction. For example, from a result of the process in each of S2 and S3, display device 1 calculates density gradient vectors 111 for the pixels respectively. Then, display device 1 compares a slope angle of a resultant vector obtained by combining respective density gradient vectors 111 for the pixels, with each of the upward, downward, leftward, rightward directions, and oblique directions. Then, a direction with the smallest difference in angle therebetween is determined as the touch operation direction.

Alternatively, even in the case where the touch operation direction is determined among the four directions, display device 1 may compare the slope angle of the resultant vector with each of the upward, downward, leftward, and rightward directions, and determines as the touch operation direction a direction with the smallest difference in angle therebetween.

The above-described method of determination from the direction of density gradient is intended for a case where an image such as the one shown in Fig. 3 (a) is captured. However, actually, a captured image such as the one shown in Fig. 3(b) or Fig. 3(c) may be input to touch operation direction determining unit 15.

In particular, when no finger shadow image is formed in the image and the background of finger pad image 101 is in white as shown in Fig. 3(c), the touch operation direction is determined in a manner opposite to that in the case of Fig. 3(a), based on the direction of density gradient. This is due to the following reason. That is, portions of the finger pad further away from the touch location toward the finger base are irradiated with external light more intense than the irradiation to the finger pad's portion at the touch location from the backlight located close thereto. Hence, in the finger pad image, an image at and around the touch location of the finger pad is darker in pixel density than an image of the finger pad's portion located closer to the base of the finger.

Hence, it is desirable for display device 1 to determine the touch operation direction based on not only the image of the finger pad at and around the touch location but also images of the portions other than the finger pad.

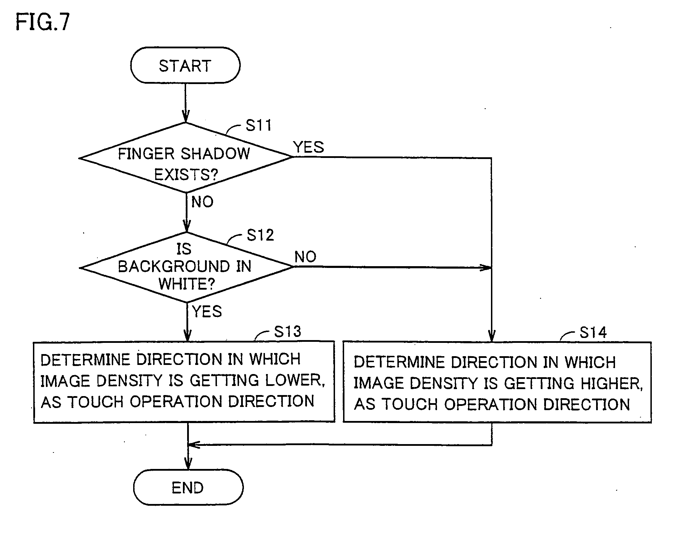

Fig. 7 shows a flowchart illustrating a procedure of processing for determining a criterion so that display device 1 determines the touch operation direction based on the finger pad image and the images of the portions other than the finger pad image.

Referring to Fig. 7, display device 1 first determines whether or not there is a shadow of a finger in an image captured upon detecting a touch operation (S11). Whether or not there is a shadow of a finger is determined as follows, for example. Pixel density distribution data such as histograms for images with shadows of fingers are obtained in advance and are recorded onto display device 1. In S 11, display device 1 generates pixel density distribution data such as a histogram based on the captured image, and compares it with the pixel density distribution data recorded in advance. When there is a similarity of a certain level or greater, the display device determines that there is a shadow of a finger therein.

In the case where there is a finger shadow image 102 in the image as shown in Fig. 3(a), display device 1 determines as the touch operation direction a direction in which image density is getting higher (see Fig. 4(b)) (S 14). On the other hand, in the case where there is no finger shadow image in the image, display device 1 determines whether or not the background of finger pad image 101 is in white (S12).

For example, in the case of Fig. 3(b), it is determined as "NO" in S12. In the case of Fig. 3(c), it is determined as "YES" in S12.

When it is determined as "NO" in S 12, display device 1 forwards the process to step S 14, in which display device 1 determines as the touch operation direction a direction in which image density is getting higher. On the other hand, when it is determined as "YES" in S 12, display device 1 determines as the touch operation direction a direction in which image density is getting lower (S 13).

In the procedure of Fig. 7 described above, when display device 1 determines as the touch operation direction the direction in which image density is getting lower, determination for the upward and downward directions and determination for the leftward and rightward directions are respectively opposite to those in touch operation direction determining process P1 shown in Fig. 5. Hence, when a Sobel value in the horizontal direction is positive, display device 1 determines that the touch direction is the rightward direction, when it is negative, display device 1 determines that the touch direction is the leftward direction, when a Sobel value in the vertical direction is positive, display device 1 determines that the touch direction is the direction of downward, and when it is negative, display device 1 determines that the touch direction is the upward direction.

### Determination from Edge Feature Distribution

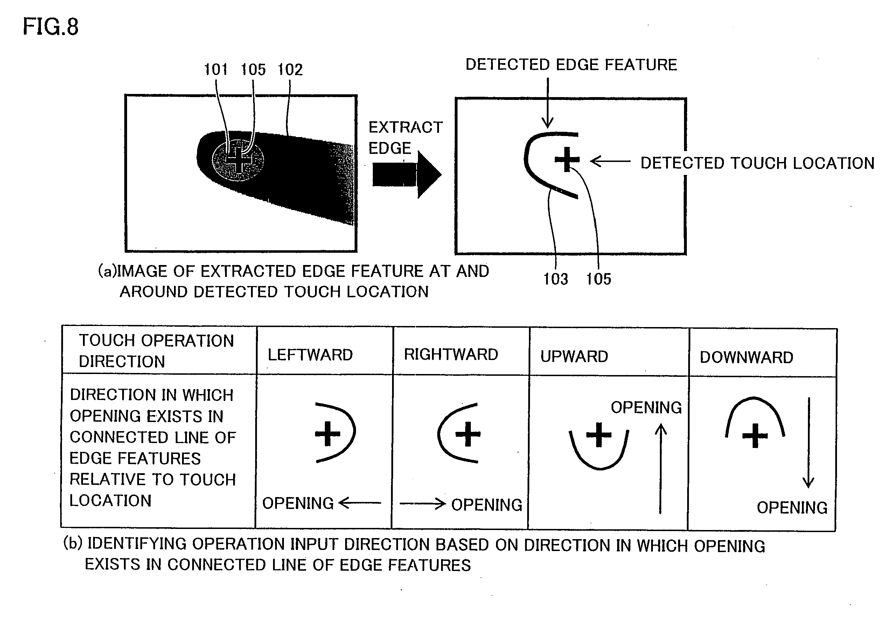

The following describes a method by which display device 1 determines a touch operation direction based on edge feature distribution. Fig. 8 illustrates a principle of the method of determining the touch operation direction based on the edge feature distribution.

In this method of determination, in the entire display screen's image captured by photosensor built-in LCD 10, display device 1 extracts an edge of a portion around a fingertip relative to a detected touch location, from a grayscale image of the touch location and its periphery, and determines a touch operation direction.

Fig. 8(a) shows, in its left side, the image of the touch location and its periphery in the image captured by photosensor built-in LCD 10. As with Fig. 4(a), indicated in this image are a finger pad image 101, which is an image of a finger pad partially in contact with the screen, a finger shadow image 102, and a cross mark 105 having its central portion representing the touch location detected by touch location detecting unit 14.

As shown in the figure, the density value in finger shadow image 102 is high at the very end of the fingertip and difference in density from the background thereof is distinct, while the density value therein is getting lower as further away therefrom in the direction toward the finger base. Accordingly, display device 1 obtains an edge 103 extracted from such an image as shown in the right side of Fig. 8(a). Edge 103 represents the fingertip portion, so an opening that faces edge 103 corresponds to the direction from the touch location toward the finger base, i.e., the direction toward the operator.

Fig. 8(b) shows a criterion for determining which one of the four upward, downward, leftward, and rightward directions the touch operation direction corresponds to, based on this principle. As shown in Fig. 8(b), display device 1 can determine one of the four leftward, rightward, upward, and downward directions as the touch operation direction based on the direction in which the opening in the edge obtained through the edge extraction process is located.

It should be noted that only the four directions are illustrated for the touch operation direction for simplicity in Fig. 8(b), but eight or sixteen directions including oblique directions may be employed by more strictly calculating the direction in which the opening of the edge is located, so as to determine the touch operation direction more exactly.

Herein, display device 1 is configured to determine the direction toward the finger base (edge opening direction) as the touch operation direction, but display device 1 may be configured to determine the direction toward the finger tip as the touch operation direction.

By applying the edge detection technique in this way, display device 1 can obtain different edge features around the touch location at, for example, a portion in which the finger is pressed strongly against the display screen, a portion in which the finger is pressed lightly thereagainst, a portion in which the finger is slightly spaced therefrom, and the like. Display device 1 examines distribution of the edge features thus obtained, thereby determining the touch operation direction. In this way, the touch operation direction can be determined accurately from slight differences in degree of contact of the finger or the like with the display screen.

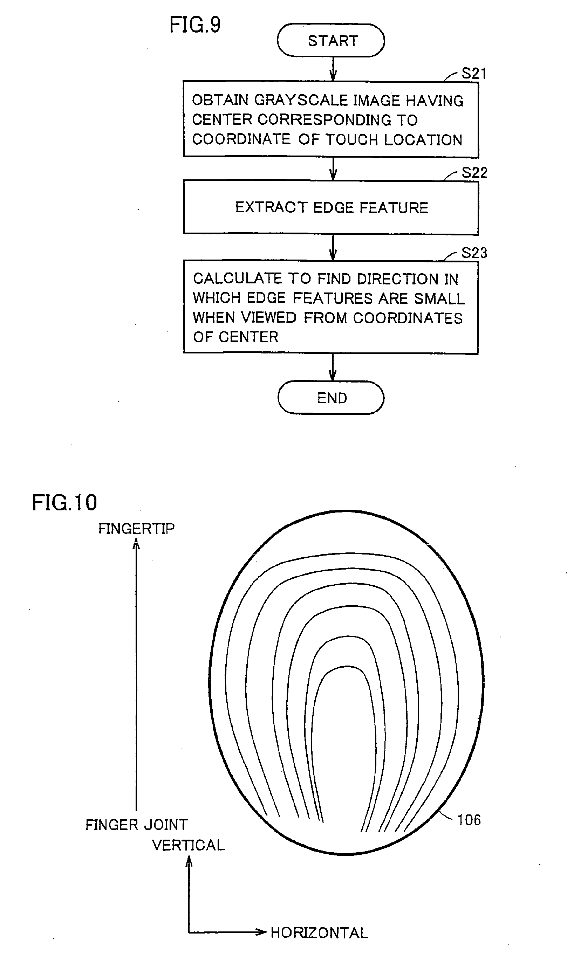

Referring to Fig. 9, the following describes a specific procedure in which display device 1 determines the touch operation direction based on the principle of determination shown in Fig. 8. Fig. 9 is a flowchart illustrating a touch operation direction determining process P2 performed by display device 1.

In touch operation direction determining process P2, display device 1 first obtains a grayscale image having a center corresponding to the coordinate of a touch location (S21). The grayscale image thus obtained is, for example, an image of a portion within an analysis area in an image captured by photosensor built-in LCD 10. The analysis area is an area of a square and has its center corresponding to the coordinate of the touch location that corresponds to the central portion of cross mark 105 as shown in Fig. 8(a). The size of the analysis area is set in advance to encompass a finger pad image 101 and a portion of a finger shadow image 102 of a standard-sized finger. It should be noted that as with step S1 in Fig. 5, display device 1 may be provided with a function of registering the size of a user's finger and may set the size of the analysis area based on the size thus registered. Further, the shape of the analysis area is not limited to the square but it may be rectangular, circular, or elliptic.

Next, display device 1 performs a process of extracting edge features based on the grayscale image thus obtained (S22). For the extraction of the edge features, display device 1 utilizes Sobel filtering or other filtering for edge extraction. Display device 1 extracts the edge features using a predetermined threshold.

Next, display device 1 specifies a direction in which the edge features are small when viewed from the coordinates of the center (the coordinates of the touch location), i.e., the direction in which an opening is located, and determines that the specified direction in which the opening is located is the touch operation direction (S23). With this, display device 1 terminates the process.

Alternatively, in step S23, display device 1 calculates barycentric coordinates of a plurality of pixels having edge features, and determines the touch operation direction therefrom. Specifically, display device 1 first extracts a plurality of pixels having edge features each equal to or larger than a predetermined threshold. Then, display device 1 weighs each of the extracted pixels with the magnitudes of pixel values, and calculates to find the barycentric coordinates. Display device 1 determines, as the touch operation direction, a direction from the location of the barycentric coordinates toward the location of the coordinates of the touch position in a straight line connecting the barycentric coordinates to the coordinates of the center of the analysis area (the coordinates of the touch location).

It should be noted that the determination of the touch operation direction using the edge feature is not limited to the above-described example and any method can be employed as long as it allows for determination of the touch operation direction from the edge features.

### Determination from Fingerprint

The following describes a method by which display device 1 determines a touch operation direction based on a fingerprint. As shown in Fig. 10, a feature of a human being's fingerprint in its pattern lies in that more horizontal lines appear at portions closer to the fingertip and more vertical lines appear at portions closer to finger's joint portion. Display device 1 utilizes such a feature of the fingerprint to determine the touch operation direction.

Specifically, first, display device 1 calculates Sobel values for each pixel in a finger pad image by means of Sobel filtering or the like, as with the method of determination from the direction of density gradient. Next, display device 1 calculates to find a direction for each pixel based on the calculated Sobel values as with the method of determination from the direction of density gradient. From distribution of the respective directions for the pixels, display device 1 specifies the fingertip portion and the finger's joint portion.

A fingerprint is not always captured in the direction shown in Fig. 10 and is inclined depending on the touch operation direction. However, the vertical lines and the horizontal lines in the pattern of the fingerprint are orthogonal to each other. By examining distributions of the lines of these two directions, the direction in which the fingertip is located and the direction in which the finger's joint is located can be roughly specified. In this way, display device 1 can determine the touch operation direction.

In this way, display device 1 reads the pattern of the fingerprint from the grayscale image obtained upon the touch operation with the finger, and determines the touch operation direction from the pattern. In this way, display device 1 can accurately determines the touch operation direction.

The method of determining a touch operation direction based on a fingerprint is not limited to the one described above. For example, it can be considered that an operator's fingerprint is registered in advance in display device 1, and display device 1 compares a captured finger pad image with the registered fingerprint by means of pattern matching so as to determine the touch operation direction.

The following describes an example in which the above-described methods of determination are applied to control of display device 1. Here, control of a hockey game is illustrated.

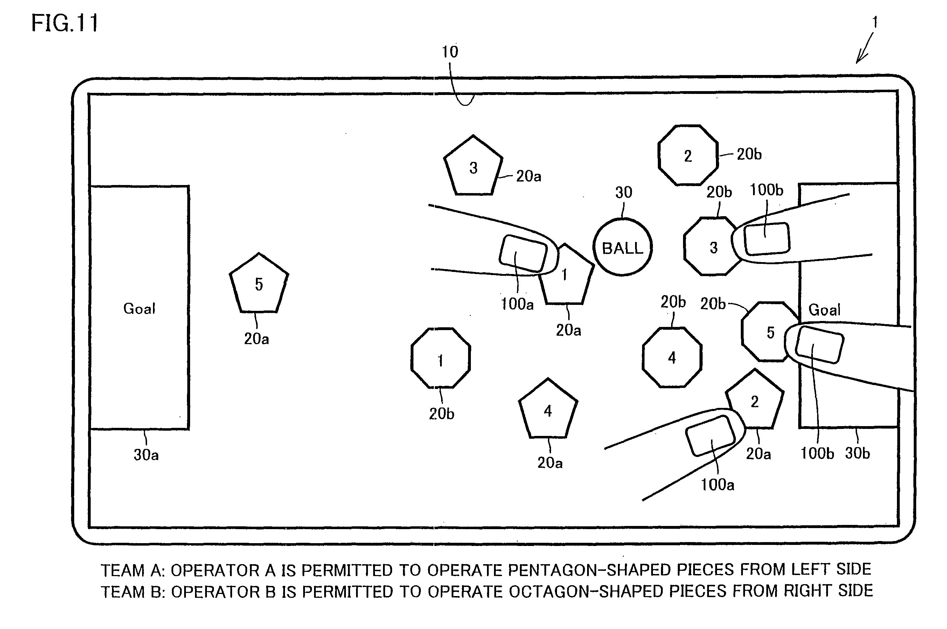

As shown in Fig. 11, display device 1 displays on its display screen a screen image of a hockey game which can be played by operators from the left side and the right side thereof. In the description herein, an operator who operates pieces from the left side of the display screen shown in Fig. 11 (the goal 30a side in the figure) is referred to as "operator A", an operator who operates pieces from the right side thereof (the goal 30b side in the figure) is referred to as "operator B", a team of operator A in the hockey game is referred to as "team A", and a team of operator B is referred to as "team B". In display device 1, operator A is supposed to operate from the left side in Fig. 11, and operator B is supposed to operate from the right side.

Display device 1 displays respective images of goal 30a of team A and goal 30b of team B on the opposite ends of the display screen. Between the goals, display device 1 displays respective images of five pentagon-shaped pieces 20a of team A, five octagon-shaped pieces 20b of team B, and a ball 30 which changes its direction of movement when hit by pieces 20a, 20b. Display device 1 displays uniform numbers 1-5 for pieces 20a respectively and displays uniform numbers 1-5 for pieces 20b respectively. In the figure, fingers 100a represent fingers of operator A and fingers 100b represent fingers of operator B. In the description below, a piece having a uniform number n (n is a natural number of not less than 1 but not more than 5) is referred to as "piece n".

Operators A, B operate pieces 20a, 20b of their teams with fingers 100a, 100b in order to push ball 30 into their opponent teams' goals 30a, 30b. When one team pushes the ball into its opponent team's goal, display device 1 adds a score therefor. The control for the game based on the operations of operators A, B is performed by, for example, control unit 19 of display device 1 (see Fig. 1).

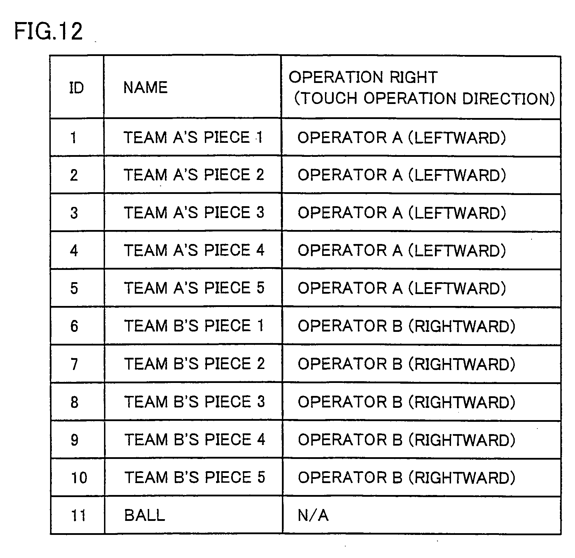

For operations of the pieces, display device 1 assigns operation rights as illustrated in Fig. 12. Display device 1 controls its operation to permit pieces 20a of team A to be operated only by operator A. Similarly, display device 1 controls its operation to permit pieces 20b of team B to be operated only by operator B.

The control above is implemented by display device 1 identifying whether or not an operator has an operation right, based on a touch operation direction (right or left) as shown in Fig. 12. Namely, display device 1 validates an operation on a piece 20a of team A only when the touch operation direction is leftward, while display device 1 validates an operation on a piece 20b of team B only when the touch operation direction is rightward. It should be noted that ball 30 is basically operated with pieces 20a, 20b, so display device 1 assigns no operation right for ball 30 to operators A, B. The operation right data shown in Fig. 12 is stored in, for example, memory unit 12 of display device 1.

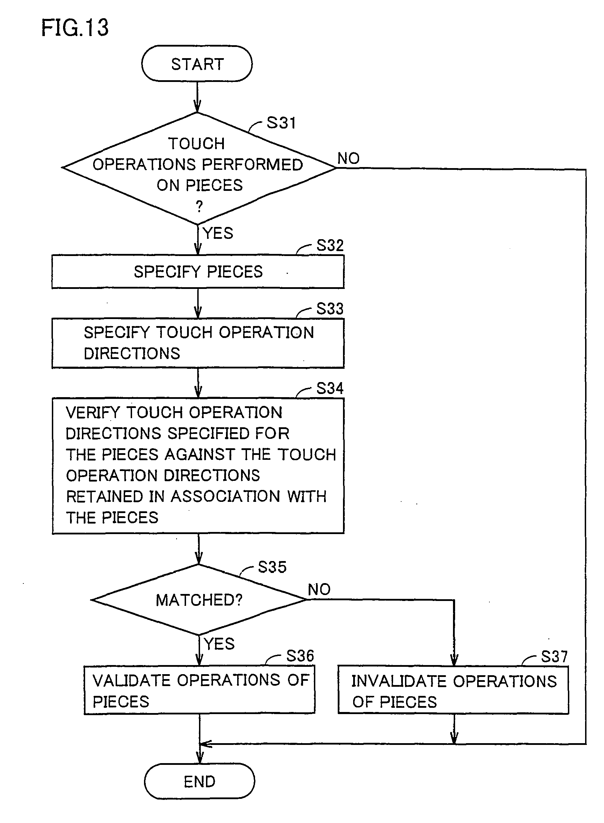

Fig. 13 is a flowchart showing a procedure of processing in which display device 1 determines based on the operation right data whether an operation on a piece is valid or invalid.

First, display device 1 determines whether or not touch location detecting unit 14 has detected a touch operation on a piece (S31). If no touch operation on a piece is detected, display device 1 ends the process.

In the example shown in Fig. 11, operator A attempts to operate piece 1 and piece 2 of pieces 20a of team A. Operator B attempts to operate piece 3 and piece 5 of pieces 20b of team B. In this case, display device 1 determines in step S31 that they are touched.

Then, display device 1 determines identities (IDs in Fig. 12) of the pieces for which the touch operations have been detected (S32). In the case of Fig. 11, from the detected four touch locations and the current locations of pieces 20a, 20b, display device 1 specifies that the IDs of the pieces to be operated by the operators are "1", "2", "8", and "10".

Thereafter, for the specified pieces, display device 1 respectively specifies touch operation directions determined by touch operation direction determining unit 15 (S33). Then, display device 1 verifies the touch operation directions specified for the pieces against the touch operation directions retained in association with the pieces, respectively (S34). Display device 1 determines whether or not each of the touch operation directions matches with its corresponding one for each of the pieces (S35).

In the example of Fig. 11, display device 1 specifies that the touch operation directions for piece 1 and piece 2 of team A are leftward, and determines that they are operated by operator A. On the other hand, display device 1 specifies that the touch operation directions of piece 3 and piece 5 of team B are rightward and determines that they are operated by operator B. The information thus specified matches with the operation right data of Fig. 12. In this case, in step S35, for each of the pieces, it is determined that the touch operation direction thereof and the touch operation direction retained in association with the piece match with each other, and display device 1 accordingly validates the operations on the pieces respectively (S36). As such, in the example of Fig. 11, both operators A and B are permitted to move the pieces that they are intended to operate.

Meanwhile, for example, if operator A attempts to operate piece 1 of team B, the specified information does not match with the operation right data of Fig. 12 and display device 1 therefore determines "NO" in S35. As a result, display device 1 invalidates the operation performed onto piece 1 of team B by operator A. In this way, operator A is not permitted to operate and move piece 1 of team B.

As such, display device 1 specifies a piece for which a touch operation has been detected, based on a touch location detected by touch location detecting unit 14 and current locations of pieces 20a, 20b. Display device 1 determines an operator thereof based on a direction determined by touch operation direction determining unit 15. In this way, display device 1 can perform control to only permit an operator with a operation right to operate a corresponding piece.

As such, display device 1 specifies the operator, thereby clearly specifying who has attempted to operate a piece when there are a plurality of operators.

When a plurality of operators operates a plurality of operation targets on one screen, display device 1 only permits an operator to operate an operation target that matches with the operation right of the operator, thus preventing the operator from doing a wrong operation. Further, display device 1 can put restrictions in a game or the like to permit operators to operate only pieces of their own teams.

Display device 1 according to the embodiment illustrated above analyzes an input image of a finger, a pen, or the like to allow for detection of a touch location and determination of a touch operation direction. Hence, control unit 19 can determine what direction an operator having done the operation is in, based on the signal indicating the touch location, the signal indicating the touch operation direction, and the information stored in memory unit 12. Thus, control unit 19 can perform information processing in accordance with the operation right provided to the operator.

Display device 1 according to the present embodiment analyzes an image obtained by the photosensors provided behind the display screen to determine what direction a person having operated an operation target on the display screen is in, relative to the screen. Thus, display device 1 with such a small scale configuration is capable of accurately determining an operation direction.

Hence, even when there are obstacles in front of the display screen of display device 1, no obstacles have not been captured in the input image used in determining the operation direction, thus preventing hindrance of the determination thereof. Further, display device 1 does not need to be provided with an apparatus for transmitting a signal to outside the display device through a human body, unlike the system described above in BACKGROUND ART. As such, a touch operation direction can be determined and subsequent image processing can be performed only by display device 1 having such a small scale, simplified configuration.

Exemplified in the above-described embodiment is a case where a touch location is detected by analyzing an image obtained by photosensor built-in LCD 10. However, the configuration for detecting a touch location is not limited to this and other embodiments can be employed.

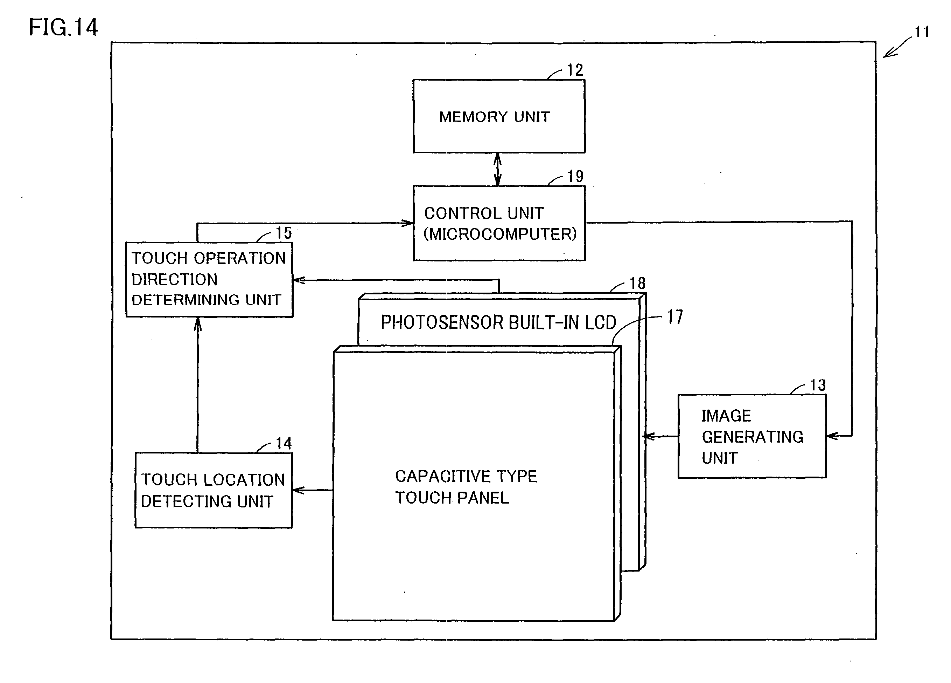

For example, the configuration of display device 1 of Fig. 1 may be changed so that a capacitive type touch panel 17 is provided on a photosensor built-in LCD 18 such as one in a display device 11 illustrated in Fig. 14. In this case, in display device 11, capacitive type touch panel 17 detects a touch location. Further, display device 11 analyzes the touch location detected by capacitive type touch panel 17 and the image obtained by photosensor built-in LCD 18, so as to determine a touch operation direction.

For the touch panel, various types of touch panels can be used as long as they can detect a touch location, such as resistive-film type, infrared type, electromagnetic induction type, and ultrasonic type touch panels.

However, in the case where the touch operation direction is determined by analyzing the image obtained by the photosensor built-in LCD, it is preferable to use the photosensor built-in LCD, rather than the capacitive type touch panel or the like, for the detection of the touch location together with the touch operation direction. This is because components of the touch panel such as a resistive film or a step of providing the resistive film on the display screen can be reduced, thus simplifying the configuration of the display device. With the configuration thus simplified, cost thereof can be reduced advantageously.

In the above-described embodiment, the photosensor built-in LCD mainly responsive to the frequency of light in the visible light region is exemplified and illustrated as an image capturing device (image input device) for capturing an image, but the configuration of the image capturing device is not limited to this. Various other configurations can be utilized.

For example, each of display devices 1, 11 includes photosensors each mainly responsive to a frequency of infrared rays rather than the frequency of the visible light region. In each of display devices 1, 11, infrared rays emitted from behind the display screen are reflected by a finger, a pen, or the like, and the infrared rays thus reflected are received by the photosensors. Each of display devices 1, 11 converts the received infrared rays into an image. The use of the photosensors each mainly responsive to the infrared rays rather than the visible light allows each of display devices 1, 11 to obtain an image of reflection of a finger pad and a shadow of a finger without influences of external light such as room light. The image obtained by the photosensors each responsive to the infrared rays utilizes the reflection of the finger, and is therefore basically the same as the one obtained by the photosensors each responsive to the frequency of the visible light region.

As such, in each of display devices 1, 11, the photosensors obtain the image from the light emitted from the backlight and reflected by an operation input object such as a finger, whereby the degree of contact of the operational input object such as a finger or a touch pen with the display screen can be fully ascertained.

Alternatively, each of display devices 1, 11 may include temperature sensors instead of the photosensors so as to convert into an input image a temperature change taking place when a finger or a pen is placed thereon. The image provided by the temperature sensors is, for example, an image in which a location touched by a finger as shown in Fig. 3(b) or Fig. 3(c) differs in contrast from its surroundings because the location is warmed or cooled by the touched finger. Further, there is a difference in temperature between a portion in which the finger is strongly pressed against the display screen and a portion in which the finger is lightly pressed thereagainst, so the image of the finger pad has a gradation ranging from black to white as shown in Fig. 4. In other words, the image provided by the temperature sensors is similar to the image provided by the photosensors.

In each of display devices 1, 11, when the image is obtained by the temperature sensors, the degree of contact of the operation input object such as a finger or a touch pen with the display screen can be ascertained fully. Further, unlike the photosensors, such display devices 1, 11 are less likely to be affected by external light such as room light or sunlight. Hence, each of display devices 1, 11 can only detect the temperature change caused by the operation input object.

Hence, each of display devices 1, 11 can detect a touch location and determine a touch direction based on an image provided by the photosensors for infrared rays or the like and an image provided by the temperature sensors, using the algorithm for detecting a touch location and determining a touch direction from an image provided by the photosensors mainly responsive to the above-described visible light region.

It should be noted that any type of image capturing devices can be used as the image capturing device as long as they are sensors or cameras that can capture an image of a finger or a pen placed thereon.

### Second Embodiment

Exemplified in the first embodiment, one embodiment of display device 1, is display device 1 applied to a gaming machine. The display device can be also applied to a car navigation system by configuring the display device to include therein a photosensor built-in dual-view LCD instead of photosensor built-in LCD 10.

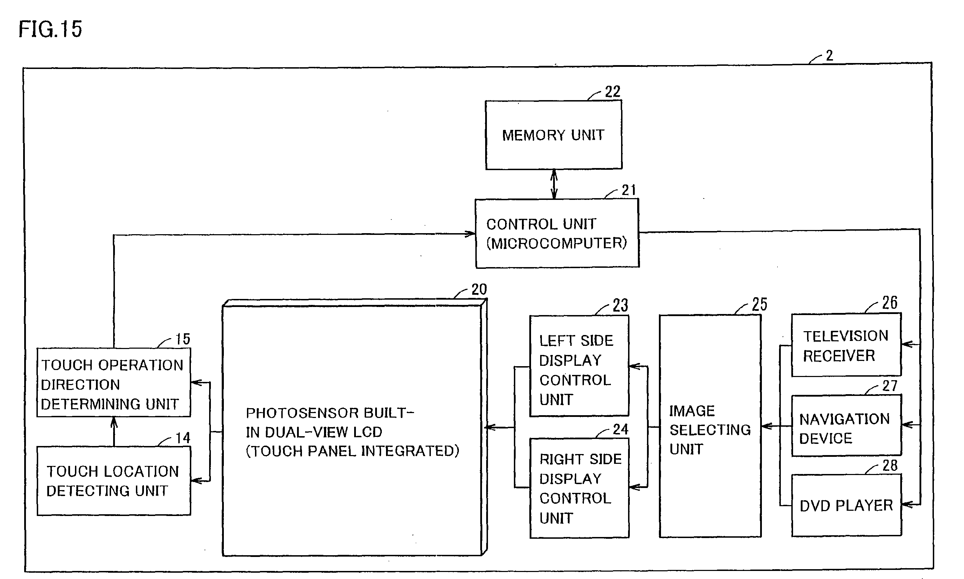

Fig. 15 is a block diagram showing a schematic configuration of a display device 2 according to a second embodiment of the present invention. Display device 2 is a car navigation system including a photosensor built-in dual-view LCD 20.

Display device 2 includes photosensor built-in dual-view LCD 20 (hereinafter, simply referred to as "LCD 20") and touch location detecting unit 14 described above. Display device 2 further includes a control unit 21 for identifying whether an operator is on the left or right side based on a signal received from touch operation direction determining unit 15 and controlling LCD 20. Display device 2 further includes a memory unit 22 for storing therein various information concerned with the control. Display device 2 further includes output devices 26-28 (a television receiver 26, a navigation device 27, and a DVD player 28). Display device 2 further includes an image selecting unit 25, which receives data from each of output devices 26-28, classifies the data into images for the left side and images for the right side, and outputs them selectively. Display device 2 further includes a left side-display control unit 23 and a right side display control unit 24 for respectively controlling images to be displayed on the left side and right side of the LCD screen of LCD 20, based on the image data sent from image selecting unit 25.

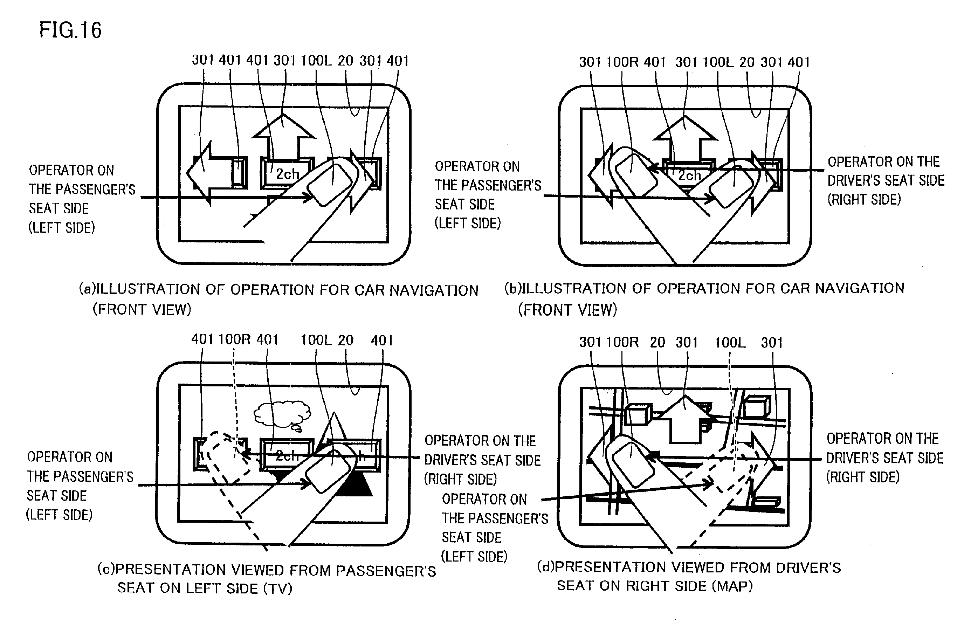

Fig. 16 shows an exemplary display screen of LCD 20. As shown in Fig. 16(c), display device 2 displays channel buttons 401 for selecting a channel of the television ("2 ch" in the figure), in such a manner that channel buttons 401 are superimposed on a scene of a mountain with clouds in a displayed television program. In addition, as shown in Fig. 16(d), display device 2 also displays scroll buttons 301 for scrolling the map, in such a manner that scroll buttons 301 are superimposed on a navigation map. LCD 20, which is capable of dual views, has a function of simultaneously providing the presentation of Fig. 16(c) to one viewing from the passenger's seat side and providing the presentation of Fig. 16(d) to one viewing from the driver's seat side.

In the presentation shown in Fig. 16(c), the operator on the passenger's seat side touches a channel button 401 with his/her finger 100L to change the television channel as desired. On the other hand, in the presentation shown in Fig. 16(d), the operator on the driver's seat side touches a scroll button 301 with his/her finger 100R to scroll the map as desired.

As shown in Fig. 16(a), channel buttons 401 and scroll buttons 301 are disposed at the same locations on the screen. Hence, when the operator on the passenger's seat side operates a channel button 401, display device 2 has to be capable of determining that the operator on the passenger's seat side did the operation.

Likewise, when the operator on the driver's seat side operates a scroll button 301 and the operator on the passenger's seat side operates a channel button 401 simultaneously as shown in Fig. 16(b), display device 2 has to be capable of determining whether a finger having touched a buttons is a finger 100R of the operator on the driver's seat side or a finger 100L of the operator on the passenger's seat side, and needs to enable a function corresponding to the button corresponding to each of the operators among buttons 301, 401.

As with each of display devices 1, 11 described as the first embodiment, display device 2 according to the second embodiment includes touch operation direction determining unit 15 in addition to touch location detecting unit 14. Accordingly, display device 2 can detect a touch operation onto button 301 or 401, and specify whether the touch operation is performed from the passenger's seat side or the driver's seat side.

As a result, for example, in the case of Fig. 16(a), touch operation direction determining unit 15 can determine that the button is operated from the left side, i.e., from the passenger's seat side. Hence, in display device 2, only the operation for the TV program channels is performed while the operation is not regarded as an operation to the map. Similarly, in the case of Fig. 16(b), display device 2 can determine, based on the two touch locations detected by touch location detecting unit 14 and the touch operation directions determined by touch operation direction determining unit 15, that the person at the passenger's seat on the left side has pressed channel button 401 and the person at the driver's seat on the right side has pressed scroll button 301. As such, even though channel buttons 401 for TV programs and scroll buttons 301 for map operations are disposed on the same locations, the operation performed by the person at the passenger's seat on the left side is reflected only in the operation of selecting a TV program and the operation performed by the person at the driver's seat on the right side is reflected only in the operation of scrolling the map.

In the description herein, the buttons for operating the television and the buttons for navigation in the car navigation system employed in a vehicle are exemplified, but the car navigation system and associated sources are mere examples. The display device is also applicable to a system in which a source whose operation is assigned to one side (for example, driver's seat side) relative to the center of the dual-view display screen is different from a source whose operation is assigned to the other side (for example, passenger's seat side).

Further, any of the methods of "determination from a direction of density gradient", "determination from edge feature distribution", and "determination from a fingerprint shape", each of which is described in the first embodiment, may be employed as a method of determination by touch operation direction determining unit 15 in the second embodiment.

Alternatively, as the method of determination by touch operation direction determining unit 15, a method of "determination from an ellipse longitudinal direction" can be employed.

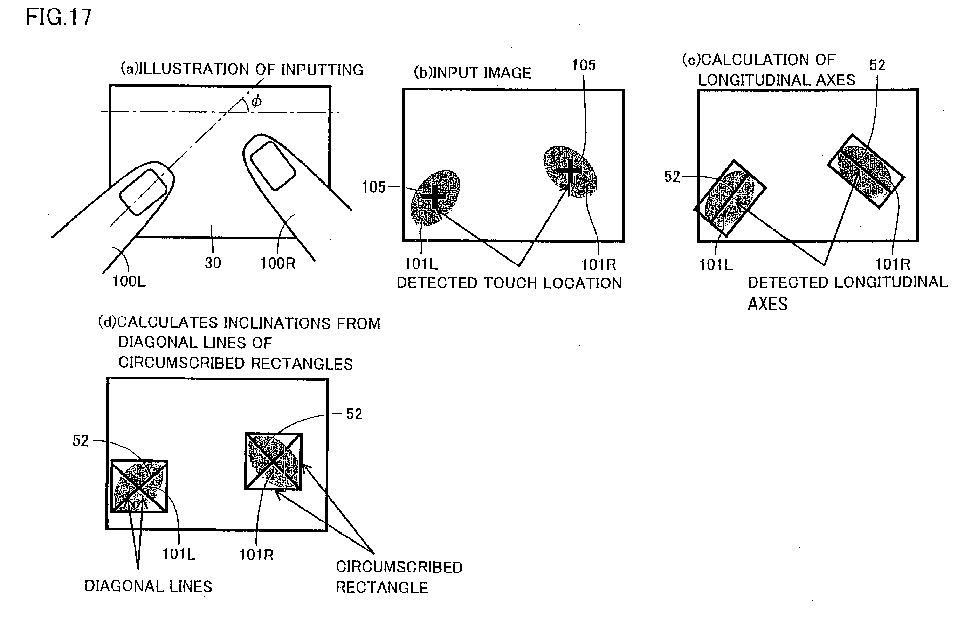

Fig. 17 illustrates a principle of the method of "determination from an ellipse longitudinal direction". In the case where display device 2 is applied to the car navigation system, the screen is disposed between the driver's seat and the passenger's seat. Therefore, in consideration of normal manners of operation, touch operation directions in which fingers touch the screen from the driver's seat side and the passenger's seat side are limited to certain ranges respectively. The ranges of the touch operation directions do not coincide with each other.

For example, as shown in Fig. 17(a), it can be considered that a straight line, which connects the tip of finger 100L of the operator, who operates from the left side of the screen (operator on the passenger's seat side), to the base of the finger thereof, and the x axis line of the screen form an angle (touch operation direction angle) φ falling within a range of greater than 0° but smaller than 90°. Similarly, finger 100R of the operator who operates from the right side (the operator on the driver's seat side) forms a touch operation direction angle falling in a range bilaterally symmetric to that of the operator who operates from the left side. As such, the angle of the touch operation direction of the operator who operates from the left side do not coincide with the angle of the touch operation direction of the operator who operates from the right side.

Hence, when touch operations are detected and finger pad images 101L, 101R each having an elliptic shape are captured as shown in Fig. 17(b), display device 2 can calculate to find longitudinal axes 52 of finger pad images 101L, 101R as shown in Fig. 17(c). When the inclination of each longitudinal axis 52 is for example positive, display device 2 determines that the touch operation direction is "leftward", whereas when the inclination of the longitudinal axis is negative, display device 2 determines that the touch operation direction is "rightward". In other words, from the inclination of the longitudinal axis, display device 2 determines whether the touch operation direction is leftward or rightward:

Since the shape of the finger pad of a finger is elliptic as such upon touching the screen, display device 2 determines the touch operation direction based on the direction of the longitudinal axis of this ellipse, thereby achieving accurate determination of the touch operation direction.

In the description herein, display device 2 determines the touch operation direction based on the inclination of longitudinal axis 52 of the ellipse, but the determination of the touch operation direction is not limited to the determination from longitudinal axis 52 of the ellipse. Display device 2 may determine the touch operation direction based on the shorter axis of the ellipse.

The longitudinal axis of the ellipse can be found by calculation, for example, as follows. For example, as shown in Fig. 17(d), display device 2 finds by calculation a circumscribed rectangle and diagonal lines of the ellipse image obtained through binarization processing or edge detection processing. The pair of diagonal lines thus found will serve as the longitudinal axis and shorter axis thereof. As shown in Fig. 17(d), in the longitudinal axis direction, pixels with high density values resulting from the finger pad are distributed more than those in the shorter axis direction. Hence, display device 2 binarizes the pixel values to indicate black and white, and calculates the distributions thereof in the pixels on the longitudinal and shorter axes to determine that a diagonal line having more pixels having pixel values indicative of black is the longitudinal axis direction of the ellipse.

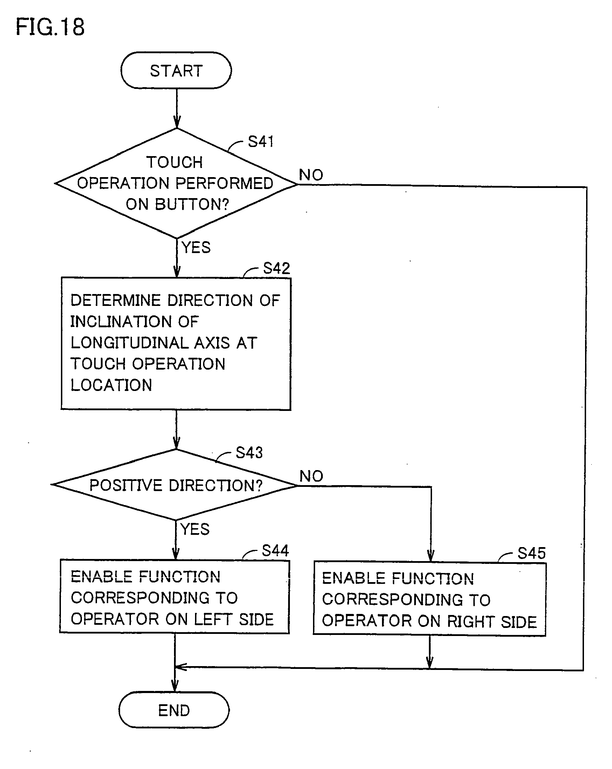

The following describes how display device 2 operates based on the determination principle shown in Fig. 17, with reference to a flowchart shown in Fig. 18. Display device 2 first determines whether or not a touch operation onto a button 301 or 401 has been detected (S41). When the touch operation has been detected, display device 2 determines the direction of inclination of the longitudinal axis of an elliptic finger pad image at the touch operation location (S42).

Next, display device 2 determines whether or not the direction of inclination of the longitudinal axes is a positive direction (φ in Fig. 17 satisfies 0° < φ < 90°) (S43). When it is determined that the direction of inclination of the longitudinal axis is a positive direction, display device 2 enables the function assigned to button 401 corresponding to the operator on the left side, i.e., the passenger's seat side (S44). On the other hand, when it is determined that the direction of inclination of the longitudinal axis is a negative direction, display device 2 enables the function assigned to button 301 corresponding to the operator on the right side, i.e., the driver's seat side (S45).

Display device 2 according to the second embodiment eliminates the need of providing a camera outside the display device or installing a signal transmitting device in a seat or a steering wheel in order to specify an operator. Thus, whether an operator operates from the left side or the right side can be determined only by display device 2. Further, the image is captured from inside the display screen to preclude obstacles for the determination. Accordingly, even when there are any obstacles in front of the display screen, for example, even when the hands of the person on the passenger's seat and the person on the driver's seat are crossed as shown in Fig. 16(a), the touch operation direction can be determined accurately. In this way, display device 2 with such a small scale configuration can accurately determine which one of the person on the passenger's seat side and the person on the driver's seat side has pressed the buttons etc., superimposed on one another.

It should be noted that each of the buttons for the passenger's seat side and each of the buttons for the driver's seat side may be arranged at different locations so as not to be superimposed on each other, in order to distinguish which one of the person on the passenger's seat and the person on the driver's seat has pressed a button. This results in, however, a limited area for displaying the buttons disadvantageously. Display device 2 according to the second embodiment is beneficial also in this point.

The display device according to each of the embodiments described above eliminates the need of installing a camera, a signal transmitting device, and the like outside the display device. Hence, the display device can accurately determine in what direction it is touched, under any circumstances, for example, even when there are any obstacles in front of the display screen or when the display device is put to stand or lie down. Thus, the display device can perform accurately subsequent information processing using the determined information. Further, with such a simple configuration constituted only by the display device, it can be accurately determined in what direction the display device is touched, so the cost therefor is as small as that for a conventional display device having a touch panel. Accordingly, the display device according to each of the embodiments can be used in various applications such as a mobile application in which one carries the display device.

The following describes variations and features of each of the embodiments described above.
(1) The display device may analyze an image based on a touch location detected by touch location detecting unit 14, so as to determine a touch operation direction.
(2) In each of the first and second embodiments, the display device analyzes an image of a predetermined area in a captured image to determine a touch operation direction. In this way, the display device processes only the image of the touch location and its periphery to determine the touch operation direction, thereby achieving simplified and fast processing. Further, the display device does not analyze an unnecessary image area. Accordingly, the display device achieves accuracy in determining the touch operation direction. The processing thus simplified allows for reduced number of gates used in fabricating a circuit of the display device. This achieves reduced manufacturing cost of the display device. However, instead of this, the display device may analyze the entire captured image.
(3) The methods of determination by touch operation direction determining unit 15 are not limited to those exemplified in the above-described embodiments, and any method of determination may be employed as long as the method allows for determination of a touch operation direction from an image.
(4) Illustrated in each of the first and second embodiments is a case where a touch operation is performed with a finger. However, even when the touch operation is performed with any member such as a touch pen, each of the first and second embodiments is applicable because an image of a shadow having its center at a location of coordinates at which the touch operation has been detected is captured as shown in Fig. 4 even when the touch operation is done with a touch pen.
(5) Display device 2 according to the second embodiment may not include television receiver 26, navigation device 27, and/or DVD player 28.
(6) The method of determination from an ellipse longitudinal direction as illustrated in the second embodiment may be employed in each of display devices 1, 11 of the first embodiment.
(7) Any of the methods of "determination from a direction of density gradient", "determination from edge feature distribution", "determination from a fingerprint shape", and "determination from an ellipse longitudinal direction" may be employed in display devices 1, 2, 11. Further, each of display devices 1, 2, 11 may be provided with a plurality of touch operation direction determining units 15 so as to selectively perform determination processing based on any of the plurality of methods of determination. Further, each of display devices 1, 2, 11 may further include a selecting operation unit to select any of the plurality of touch operation direction determining units 15 in response to an operator's operation. Alternatively, each of display devices 1, 2, 11 may operates the plurality of touch operation direction determining units 15 to determine a touch operation direction based on a plurality of determination results thereof.

Although the embodiments of the present invention have been described, it should be considered that the embodiments disclosed herein are illustrative and non-restrictive in any respect. The scope of the present invention is defined by the scope of claims, and is intended to include any modifications within the scope and meaning equivalent to the terms of the claims.

## Claims

1. A display device (1, 2, 11) comprising:
a display unit (10, 18, 20) having a display screen;
an image capturing unit for capturing, in an image, a touch operation performed onto said display screen, from inside said display unit (10, 18, 20);
a touch location detecting unit (14) for detecting a touch location of said touch operation performed onto said display screen; and
a direction determining unit (15) for determining a touch direction of said touch operation performed onto said display screen, based on the image captured by said image capturing unit.

2. The display device (1, 2, 11) according to claim 1, wherein said direction determining unit (15) determines said touch direction based on an image of a predetermined area from said touch location in the image captured by said image capturing unit.

3. The display device (1, 2, 11) according to claim 1, wherein said direction determining unit (15) determines said touch direction based on a change in density in an image of said touch location and a periphery thereof, when a finger or a touch member touches said display screen for said touch operation and is captured in the image by said image capturing unit.

4. The display device (1, 2, 11) according to claim 1, wherein:
said direction determining unit (15) includes a density gradient direction calculating unit for calculating to find a direction of density gradient in an image of said touch location and a periphery thereof when a finger or a touch member touches said display screen for said touch operation and is captured in the image by said image capturing unit (10, 18, 20), and
said direction determining unit (15) determines said touch direction based on the direction of density gradient thus calculated by said density gradient direction calculating unit.

5. The display device (1, 2, 11) according to claim 1, wherein:
said direction determining unit (15) includes an edge feature distribution calculating unit for calculating edge feature distribution in an image of said touch location and a periphery thereof, when a finger or a touch member touches said display screen for said touch operation and is captured in the image by said image capturing unit (10, 18, 20), and
said direction determining unit (15) determines said touch direction based on the edge feature distribution thus calculated by said edge feature distribution calculating unit.

6. The display device (1, 2, 11) according to claim 1, wherein:
said direction determining unit (15) includes a longitudinal axis direction calculating unit for calculating to find an ellipse longitudinal direction of an image of a finger at and around said touch location when the finger touches said display screen for said touch operation and is captured in the image by said image capturing unit, and
said direction determining unit (15) determines said touch direction based on the ellipse longitudinal direction thus calculated by said longitudinal axis direction calculating unit.

7. The display device (1, 2, 11) according to claim 1, wherein said direction determining unit (15) determines said touch direction based on a shape of an image of a fingerprint of a finger at and around said touch location, when the finger touches said display screen for said touch operation and is captured in the image by said image capturing unit.

8. The display device (1, 2, 11) according to claim 1, wherein said display unit (10, 18, 20) is capable of displaying on said display screen a plurality of operation target images for which predetermined functions are enabled based on touch operations thereonto,
the display device further comprising:
a memory unit (12, 22) for retaining therein touch directions for said plurality of operation target images for which the functions are enabled based on said touch operations; and
a function enabling unit for enabling a function for an operation target image based on a touch operation performed onto the operation target image, when a touch direction upon detection of the touch operation onto the operation target image matches with a touch direction retained in said memory unit (12, 22) in association with the operation target image.

9. The display device (1, 2, 11) according to claim 1, wherein:
said display unit (10, 18, 20) is capable of displaying different images in different directions, and
said display unit (10, 18, 20) displays a first button image in a first direction at a specific location on said display screen and displays a second button image in a second direction at said specific location, a first function being enabled when a touch operation is performed onto said first button image, a second function being enabled when a touch operation is performed onto said second button image,
the display device (1, 2, 11) further comprising
a function selecting unit for enabling either one of the two functions based on a touch direction determined by said direction determining unit (15) when a touch location detected by said touch location detecting unit (14) corresponds to said specific location.

10. The display device (1, 2, 11) according to claim 1, wherein said image capturing unit is a photosensor.

11. The display device (1, 2, 11) according to claim 1, wherein said image capturing unit is a temperature sensor.

12. The display device (1, 2, 11) according to claim 1, wherein said touch location detecting unit detects the touch location based on the image captured by said image capturing unit.

13. The display device (1, 2, 11) according to claim 1, further comprising a control unit (19, 21) for controlling an operation of said display device (1, 2, 11), wherein
said control unit (19, 21) causes said display device (1, 2, 11) to operate according to said touch location detected and said touch direction determined.

14. A display device (1, 2, 11) having a display screen and receiving an input when an object used for a touch operation is brought into contact with said display screen, the display device (1, 2, 11) comprising:
an image capturing unit for capturing an image of said object making contact with said display screen, through said display screen;
a detecting unit (14) for detecting a contact location of said object with said display screen;
a determining unit (15) for determining a direction of said object relative to said display screen based on the image captured by said image capturing unit; and
a control unit (19, 21) for controlling an operation of said display device (1, 2, 11),
said control unit (19, 21) causing said display device (1, 2, 11) to operate according to said contact location and said direction determined.

15. A control method in a display device (1, 2, 11) receiving an input when an object used for a touch operation is brought into contact with a display screen, the control method comprising the steps of:
capturing an image of said object making contact with said display screen, through said display screen;
detecting a contact location of said object with said display screen;
determining a direction of said object relative to said display screen based on the image captured by said image capturing unit (S1-S5, S 13, S 14, S23, S33); and
causing said display device (1, 2, 11) to operate according to said contact location and said direction determined (S36, S37, S44, S45).

## Amended claims

### Amended claims under Art. 19.1 PCT

1. (Amended) A display device (1, 2, 11) receiving a touch input, comprising:
a display unit (10, 18, 20) having a display screen;
an image capturing unit for capturing, in an image, a touch operation, which is said touch input, performed onto said display screen, from inside said display unit (10, 18, 20);
a touch location detecting unit (14) for detecting a touch location of said touch operation performed onto said display screen; and
a direction determining unit (15) for determining a touch direction of said touch operation performed onto said display screen, based on the image captured by said image capturing unit.

2. The display device (1, 2, 11) according to claim 1, wherein said direction determining unit (15) determines said touch direction based on an image of a predetermined area from said touch location in the image captured by said image capturing unit.

3. The display device (1, 2, 11) according to claim 1, wherein said direction determining unit (15) determines said touch direction based on a change in density in an image of said touch location and a periphery thereof, when a finger or a touch member touches said display screen for said touch operation and is captured in the image by said image capturing unit.

4. The display device (1, 2, 11) according to claim 1, wherein:
said direction determining unit (15) includes a density gradient direction calculating unit for calculating to find a direction of density gradient in an image of said touch location and a periphery thereof when a finger or a touch member touches said display screen for said touch operation and is captured in the image by said image capturing unit (10, 18, 20), and
said direction determining unit (15) determines said touch direction based on the direction of density gradient thus calculated by said density gradient direction calculating unit.

5. The display device (1, 2, 11) according to claim 1, wherein:
said direction determining unit (15) includes an edge feature distribution calculating unit for calculating edge feature distribution in an image of said touch location and a periphery thereof, when a finger or a touch member touches said display screen for said touch operation and is captured in the image by said image capturing unit (10, 18, 20), and
said direction determining unit (15) determines said touch direction based on the edge feature distribution thus calculated by said edge feature distribution calculating unit.

6. The display device (1, 2, 11) according to claim 1, wherein:
said direction determining unit (15) includes a longitudinal axis direction calculating unit for calculating to find an ellipse longitudinal direction of an image of a finger at and around said touch location when the finger touches said display screen for said touch operation and is captured in the image by said image capturing unit, and
said direction determining unit (15) determines said touch direction based on the ellipse longitudinal direction thus calculated by said longitudinal axis direction calculating unit.

7. The display device (1, 2, 11) according to claim 1, wherein said direction determining unit (15) determines said touch direction based on a shape of an image of a fingerprint of a finger at and around said touch location, when the finger touches said display screen for said touch operation and is captured in the image by said image
capturing unit.

8. The display device (1, 2, 11) according to claim 1, wherein said display unit (10, 18, 20) is capable of displaying on said display screen a plurality of operation target images for which predetermined functions are enabled based on touch operations thereonto,
the display device further comprising:
a memory unit (12, 22) for retaining therein touch directions for said plurality of operation target images for which the functions are enabled based on said touch operations; and
a function enabling unit for enabling a function for an operation target image based on a touch operation performed onto the operation target image, when a touch direction upon detection of the touch operation onto the operation target image matches with a touch direction retained in said memory unit (12, 22) in association with the operation target image.

9. The display device (1, 2, 11) according to claim 1, wherein:
said display unit (10, 18, 20) is capable of displaying different images in different directions, and
said display unit (10, 18, 20) displays a first button image in a first direction at a specific location on said display screen and displays a second button image in a second direction at said specific location, a first function being enabled when a touch operation is performed onto said first button image, a second function being enabled when a touch operation is performed onto said second button image,
the display device (1, 2, 11) further comprising
a function selecting unit for enabling either one of the two functions based on a touch direction determined by said direction determining unit (15) when a touch location detected by said touch location detecting unit (14) corresponds to said specific location.

10. The display device (1, 2, 11) according to claim 1, wherein said image capturing unit is a photosensor.

11. The display device (1, 2, 11) according to claim 1, wherein said image capturing unit is a temperature sensor.

12. The display device (1, 2, 11) according to claim 1, wherein said touch location detecting unit detects the touch location based on the image captured by said image capturing unit.

13. The display device (1, 2, 11) according to claim 1, further comprising a control unit (19, 21) for controlling an operation of said display device (1, 2, 11), wherein
said control unit (19, 21) causes said display device (1, 2, 11) to operate according to said touch location detected and said touch direction determined.

14. A display device (1, 2, 11) having a display screen and receiving an input when an object used for a touch operation is brought into contact with said display screen, the display device (1, 2, 11) comprising:
an image capturing unit for capturing an image of said object making contact with said display screen, through said display screen;
a detecting unit (14) for detecting a contact location of said object with said display screen;
a determining unit (15) for determining a direction of said object relative to said display screen based on the image captured by said image capturing unit; and
a control unit (19, 21) for controlling an operation of said display device (1, 2, 11),
said control unit (19, 21) causing said display device (1, 2, 11) to operate according to said contact location and said direction determined.

15. A control method in a display device (1, 2, 11) receiving an input when an object used for a touch operation is brought into contact with a display screen, the control method comprising the steps of:
capturing an image of said object making contact with said display screen, through said display screen;
detecting a contact location of said object with said display screen;
determining a direction of said object relative to said display screen based on the image captured by said image capturing unit (S1-S5, S13, S14, S23, S33); and
causing said display device (1, 2, 11) to operate according to said contact location and said direction determined (S36, S37, S44, S45).

16. (Added) The display device 1, 2, 11) according to claim 2, wherein the image of the predetermined area from said touch location is an area, having a center corresponding to said touch location, in which a finger or a touch member is in contact with and close to said display unit.
